(19) Europäisches Patentamt
European Patent Office
Office européen des brevets

(11) **EP 3 557 183 A1**

(12) **EUROPÄISCHE PATENTANMELDUNG**

(43) Veröffentlichungstag:
**23.10.2019 Patentblatt 2019/43**

(51) Int Cl.:
**G01B 11/24** *(2006.01)* **G01B 11/245** *(2006.01)*

(21) Anmeldenummer: **18171550.9**

(22) Anmeldetag: **09.05.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **17.04.2018 EP 18167761**

(71) Anmelder: **ZUMBACH ELECTRONIC AG**
**2552 Orpund (CH)**

(72) Erfinder:
• **Balemi, Silvano**
**6598 Tenero (CH)**
• **Daleo, James Vincent**
**Patterson, NY 12563 (US)**

(74) Vertreter: **Köster, Hajo**
**Meissner Bolte Patentanwälte**
**Rechtsanwälte Partnerschaft mbB**
**Widenmayerstraße 47**
**80538 München (DE)**

(54) **VERFAHREN UND SYSTEM ZUR VERMESSUNG EINES PRODUKTES, INSBESONDERE EINES RUNDPROFILS**

(57) Die Erfindung betrifft ein Verfahren zur Vermessung eines Querschnittes eines Produktes (10), insbesondere eines Rundprofiles, mit unbekannter Ovalität, wobei mittels einer mindestens triaxialen Messeinrichtung, mindestens drei an dem zu vermessenden Produkt (10) anliegende Schattenkanten vermessen und daraus mindestens drei Tangenten bestimmt werden, wobei eine elliptische Form des zu vermessenden Querschnitts angenommen wird und aus den jeweiligen Tangenten eine Ellipsen-Haupthalbachse a und eine Ellipsen-Nebenhalbachse b und/oder ein Neigungswinkel des Querschnittes bestimmt werden, wobei aus a und b die Ovalität und/oder ein Durchschnittsdurchmesser abgeleitet wird/werden. (Fig. 1)

Fig. 1

EP 3 557 183 A1

**Beschreibung**

Die Erfindung betrifft ein Verfahren und ein System zur Vermessung eines Produktes, insbesondere eines Rundprofiles.

WO 2010/037865 A1 beschreibt ein Verfahren zur Bestimmung von Formparametern von in ihrer Längsrichtung vorbewegten Langprodukten in Walzstraßen, insbesondere zur Rundheitsbestimmung von Rundprofilen, bei dem mit Hilfe einer Messeinrichtung mit mindestens zwei Laserscannern, die jeweils einen lichtempfindlichen Sensor und einen Laser aufweisen, mindestens drei an dem zu vermessenden Längsprodukt anliegende und das Längsprodukt umschließende, ein Polygon bildender Schattenkanten erzeugt und vermessen und daraus die entsprechenden Tangenten errechnet werden.

Generell ist es oftmals wünschenswert die Ovalität eines Querschnittes (und/oder verwandter Parameter) von, insbesondere kontinuierlich hergestellten, Produkten, wie Kabeln, Drähten, Stangen, Stäben, Röhren usw. zu bestimmen.

Unter Ovalität ist in diesem Zusammenhang insbesondere der größtmögliche Unterschied zwischen einem ersten Durchmesser des Produkt-Querschnittes (bei einem bestimmten Winkel) und einem zweiten Durchmesser desselben Produkt-Querschnittes, senkrecht auf den ersten Durchmesser, zu verstehen. Dieser größtmögliche Unterschied kann gefunden werden, wenn ein jeweiliger erster Durchmesser unter allen möglichen Winkeln (zumindest über einen Winkelbereich von 180°) betrachtet wird.

Ein Durchmesser wiederum ist vorzugsweise als größter Abstand zwischen zwei Punkten zu verstehen, die zu dem zu untersuchenden Produkt gehören, wenn der Produkt-Querschnitt unter einem vorbestimmten Winkel projiziert wird. Dieser Durchmesser kann unter anderem mechanisch (beispielsweise mit einem Messschieber) oder optisch (beispielsweise mit einem optischen Mikrometer) vermessen werden.

Im Stand der Technik werden bereits verschiedene Verfahren angewandt, um (kontinuierlich) die Ovalität und den Durchschnittsdurchmesser eines Produktes (z.B. durch Vermessung mehrerer Durchmesser zur selben Zeit) durchzuführen. Beispielsweise werden dazu optische Messeinrichtungen (Mikrometer) eingesetzt, bei denen eine Laserlichtquelle ein Messfeld (Messbereich bzw. Messvolumen, in dem das Produkt angeordnet ist) scannt bzw. abtastet. Ein Objekt (Produkt) in dem Messfeld erzeugt dann einen Schatten. Die Breite des Schattens (bei Projektion auf eine zu den ausgestrahlten Lichtstrahlen senkrechte Ebene) gibt den Durchmesser des Produktes bei dem betrachteten Einfall (Winkel) des einfallenden Laserstrahls an.

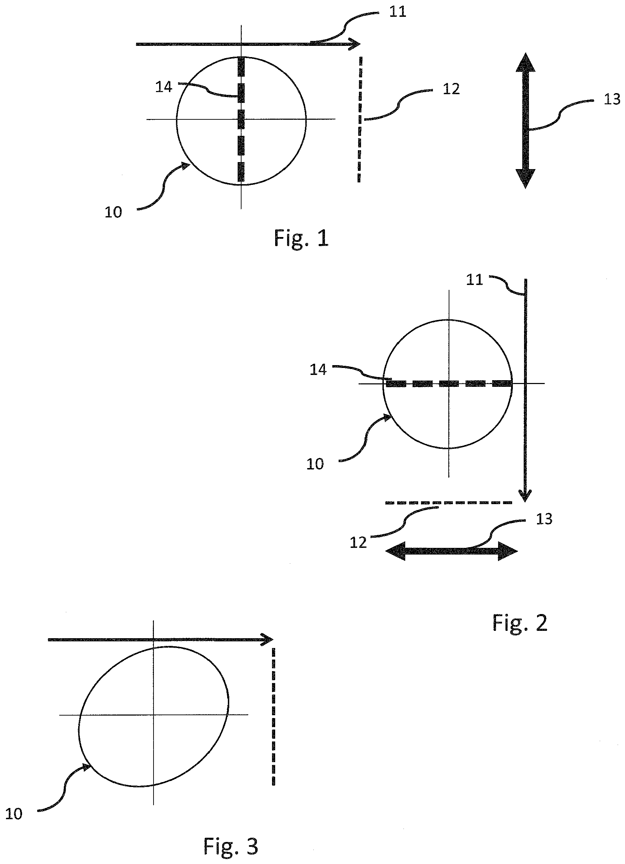

Wenn der Querschnitt des Objektes (Produktes) rund ist, gibt also beispielsweise ein Liniensegment, das von den zwei zueinander entferntesten Punkten definiert wird (von der Einstrahlrichtung des Laserstrahls gesehen) den Durchmesser des Produktes unter dem entsprechenden Winkel an (siehe Fig. 1). Die Schattenbreite korrespondiert dann mit dem Durchmesser des Kreises in Bezug auf die gemessene (Mess-)Achse.

Wenn nun dasselbe Produkt (Objekt) in einem Winkelabstand von 90° (siehe Fig. 2) gegenüber dem vorherigen Fall gemessen wird, wird ein "zweiter" Durchmesser bestimmt. Wenn das Produkt (wie hier angenommen) im Querschnitt rund ist, ist der Durchmesser immer derselbe und die Ovalität (wie oben definiert) null. Dies gilt völlig unabhängig von der Einfallrichtung des Strahls bzw. gilt für jede Einfallrichtung des Strahls. Der gemessene Durchmesser ist in diesem Fall immer derselbe und korrespondiert mit dem Durchschnittsdurchmesser.

Die Fähigkeit einer Messeinrichtung, die Ovalität zu vermessen, kann anhand eines elliptisch-geformten Querschnittes charakterisiert werden. Die Gleichung einer Ellipse, die mit ihrem Ellipsenzentrum im Ursprung und mit Ellipsenachsen mit der X- bzw. Y-Achse ausgerichtet ist:

$$x^2/a^2 + y^2/b^2 = 1$$

Hierbei ist a die Länge der Haupt- und b die Länge der Nebenhalbachse.

In einem solchen (elliptischen bzw. unrunden) Fall ändern sich die (gemessenen) Durchmesser in Abhängigkeit von der Strahlrichtung, wie in Fig. 3 gezeigt.

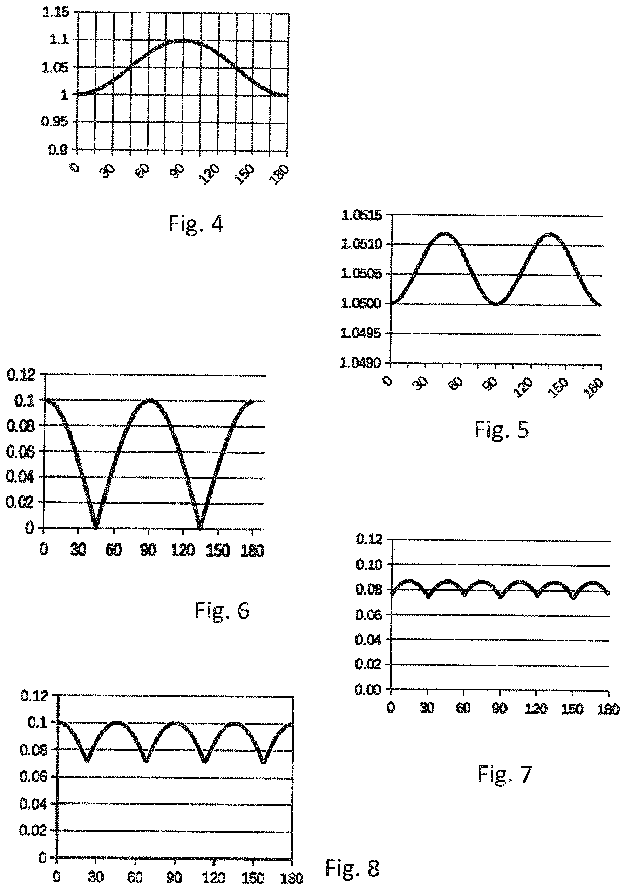

Wenn beispielsweise das Produkt bzw. dessen Querschnitt eine Ovalität von 10 % aufweist (vgl. Fig. 4), kann für verschiedene Strahlrichtungen ein gemessener Durchmesser zwischen dem Wert der Nebenachse (in Fig. 4: 1,0) und dem Wert der Hauptachse (in Fig. 4: 1,1) schwanken.

Die Messung (bzw. Bestimmung) des tatsächlichen Durchschnittsdurchmessers kann durch Messen unter zwei verschiedenen (Mess-)Achsen, die einen Winkelabstand von 90° zueinander aufweisen und durch Berechnung eines Durchschnittswerts dieser beiden Messungen verbessert werden. Insbesondere kann dann aus momentanen Messwerten eine bessere Schätzung für den echten Wert erlangt werden. Dies ist anhand Fig. 5 gezeigt. Fig. 5 zeigt den 2-Achsen-Durchschnittsdurchmesser (arithmetisches Mittel) zweier Messungen (die unter einem Winkelabstand von 90° voneinander durchgeführt wurden). Weiterhin erkennt man im Vergleich zu Fig. 4, dass der so bestimmte 2-Achsen-Durchschnittsdurchmesser eine deutlich geringere maximale Abweichung gegenüber dem tatsächlichen Durchschnittsdurchmesser (hier: 1,05) aufweist (im Vergleich zur Bestimmung des Durchschnittsdurchmessers ausgehend von einer einzigen Durchmessermessung).

In diesem Zusammenhang ist darauf hinzuweisen, dass dieser gemessene Durchschnittswert nur in Ausnahmefällen auch dem (tatsächlichen) Mittelwert von Haupt- und Nebenachse, beziehungsweise der (tatsächlichen) Summe der Haupt- und Nebenhalbachse darstellt.

Wenn die Strahlrichtung entweder mit der Haupt- oder Nebenachse des (elliptischen) Produkt-Querschnittes zusammenfällt kann die tatsächliche (wahre) Ovalität bestimmt werden. Wenn jedoch die Strahlrichtung in Bezug auf die Haupt- bzw. Nebenachse rotiert wird, können beide Schattenbreiten identisch und die gemessene Ovalität sogar null sein. Dies ist anhand von Fig. 6 illustriert. In Fig. 6 ist die gemessene Ovalität (senkrechte Achse) in Abhängigkeit von dem Winkel gegenüber der Haupt- bzw. Nebenachse dargestellt (weiterhin, wie oben, für den Fall einer bi-axialen Messung mit zwei zueinander senkrecht ausgerichteten Lichtstrahlen).

Eine Verbesserung bei der Ovalitätsmessung kann durch eine Vermessung in drei (verschiedenen) (Mess-)Achsen (tri-axial) oder vier (verschiedenen) oder mehr (Mess-)Achsen, insbesondere unter äquidistanten Winkeln, erreicht werden. Im bisher betrachteten Beispiel ist die tatsächliche (wirkliche) Ovalität 0,1. Die drei (Mess-)Achsen einer tri-axialen optischen Vermessungseinrichtung ergeben in einem solchen Fall zumindest immer (für jeden Winkel der ersten Mess-Achse) eine Ovalität größer null (in diesem Fall bestimmt durch den größten Durchmesser minus dem kleinsten Durchmesser unter den drei gemessenen Durchmessern unter den drei Mess-Achsen). Andererseits ist dieser gemessene Ovalitätswert immer unterhalb des tatsächlichen Ovalitätswerts (anders als bei der oben beschriebenen bi-axialen Messung, wo zumindest für bestimmte Ausnahmefälle der tatsächliche Wert angezeigt werden kann). Dies ist für den tri-axialen Fall in Fig. 7 illustriert. Fig. 7 zeigt wiederum die gemessene Ovalität (senkrechte Achse) in Abhängigkeit von einem Messwinkel gegenüber der Haupt- bzw. Neben-Ellipsen-Achse, hier für den Fall von drei Messungen unter einem Winkelabstand zueinander von 60°. Wie Fig. 8 zeigt sind die Ergebnisse für eine vierachsige Vermessung (bei einem Winkelabstand von 45°) nicht erheblich besser. Zwar kann hier (wie im bi-axialen Fall) zumindest bei bestimmten Winkeln die tatsächliche Ovalität korrekt bestimmt werden; andererseits ist es so, dass gegenüber dem tri-axialen Fall unter anderen Winkeln wiederum eine noch geringere gemessene Ovalität (gegenüber der tatsächlichen Ovalität) bestimmt wird.

Aus den obigen Erläuterungen erkennt man, dass im Stand der Technik übliche Verfahren zur Bestimmung der Ovalität und/oder des Durchschnittsdurchmessers (bei unbekanntem Neigungswinkel) zu teils vergleichsweise ungenauen Ergebnissen führen können.

Es ist daher Aufgabe der Erfindung ein Verfahren sowie ein entsprechendes System vorzuschlagen, mit dem ein Produkt, insbesondere ein Rundprofil, hinsichtlich seiner (zu bestimmenden) Ovalität bzw. seines (zu bestimmenden) Durchschnittsdurchmessers auf einfache Art und Weise mit einem möglichst guten Ergebnis vermessen werden kann.

Diese Aufgabe wird mit den Merkmalen des Anspruchs 1 gelöst.

Dabei liegen der vorliegenden Erfindung die folgenden Überlegungen zu Grunde.

Zunächst kann der zu vermessende Querschnitt als elliptisch angenommen werden (beispielsweise, wenn sich eine elliptische Form aufgrund eines Herstellverfahrens oder sonstiger Informationen zumindest annähernd ergibt). Mit dieser a-priori-Information bzw. a-priori-Annahme kann dann, wie im Folgenden erläutert, eine vergleichsweise gute Schätzung des Durchschnittsdurchmessers und/oder der Ovalität und/oder des Neigungswinkels erhalten werden.

Der Durchschnittsdurchmesser (der angenommenen Ellipse) soll als Summe aus der Haupt- und Nebenhalbachse (der angenommenen Ellipse) verstanden werden.

$$Davg = (a + b)$$

Die (wahre) Ovalität ist zweimal die Differenz aus der Länge der Haupthalbachse minus der Länge der Nebenhalbachse.

$$Ovalität = 2(a - b)$$

Erfindungsgemäß wird der Ansatz verfolgt, Ovalität und Durchschnittsdurchmesser nicht (unmittelbar) aus den gemessenen Werten zu bestimmen, sondern zunächst die Ellipsenparameter a und b zu schätzen und dann, basierend auf der Schätzung, den Durchschnittsdurchmesser und die Ovalität in Abhängigkeit von a und b (basierend auf den zwei obigen Gleichungen) zu bestimmen (bzw. zu errechnen).

Eine derartige Vorgehensweise ist nicht nur (allerdings insbesondere) für exaktelliptische Querschnitts-Formen vorteilhaft. Es ist nämlich so, dass bei vielen Anwendungen nur vergleichsweise geringe Abweichungen von der Kreisform vorliegen und das Produkt bzw. dessen Querschnitt Symmetrien entlang zweier senkrecht zueinanderstehender (Mess-)Achsen aufweist. In einem solchen Fall ist eine Ellipse zumindest eine sehr gute Annäherung an die (tatsächliche) Querschnitts-Form. In jedem Fall kann erreicht werden, dass Ovalität und Durchschnittsdurchmesser konsistent und unabhängig von dem Beobachtungswinkel, der den Messdaten zu Grunde liegt geschätzt (bestimmt bzw. errechnet) werden kann.

Die oben genannte Aufgabe wird insbesondere gelöst durch ein Verfahren zur Vermessung eines Querschnittes eines Produktes (Objektes), insbesondere eines Rundprofiles, mit (a priori) unbekannter Ovalität (sowie a priori unbekanntem Neigungswinkel und Durchschnittsdurchmesser), wobei mittels einer mindestens tri-axialen, Messeinrichtung mindestens drei an dem zu vermessenden Produkt anliegende Schattenkanten (bzw. ggf. mindestens drei an dem zu vermessenden Produkt anliegende das Produkt umschließende, Schattenkanten-Paare) vermessen und daraus mindestens drei entsprechende Tangenten (bzw. ggf. entsprechende Tangentenpaare) bestimmt werden, wobei eine elliptische Form des zu vermessenden Querschnitts angenommen wird und aus den Tangenten (bzw. den Abständen der jeweiligen Tangenten der mindestens drei Tangentenpaare) Ellipsenparameter, insbesondere eine (Ellipsen-) Haupthalbachse a und eine (Ellipsen-) Nebenhalbachse b bestimmt werden, wobei aus den Ellipsenparametern, insbesondere a und b die Ovalität und/oder ein Durchschnittsdurchmesser abgeleitet wird/werden. Ebenso kann direkt aus diesen Tangenten (bzw. Tagentenpaaren) ein Neigungswinkel des Querschnittes abgeleitet werden.

Ein Kerngedanke der Erfindung liegt also darin, dass der zu bestimmende geometrische Parameter (Ovalität bzw. Durchschnittsdurchmesser bzw. Neigungswinkel) nicht unmittelbar aus den Tangenten (bzw. Abständen der Tangenten) bestimmt wird, sondern vor dieser Bestimmung zunächst die Ellipsenparameter (also insbesondere die Haupt- und Nebenachse bzw. die Haupthalbachse a und Nebenhalbachse b) bestimmt bzw. berechnet oder geschätzt werden, wobei dann aus den dann bekannten Ellipsenparametern, insbesondere a und b, der entsprechende Parameter abgeleitet (errechnet) werden kann. Dadurch kann auf einfache Art und Weise eine vergleichsweise genaue Bestimmung, insbesondere der Ovalität und/oder des Durchschnittsdurchmessers und/oder des Neigungswinkels des zu vermessenden Querschnitts abgeleitet werden.

Erfindungsgemäß ist es also insbesondere so, dass zu einem Zeitpunkt, zu dem Ovalität (bzw. Neigungswinkel bzw. Durchschnittsdurchmesser) noch nicht bekannt sind, Werte für die Ellipsenparameter, insbesondere für die Haupthalbachse a und die Nebenhalbachse b, gewonnen werden (insbesondere errechnet werden) und (nachfolgend) daraus die Ovalität (bzw. der Durchschnittsdurchmesser) bestimmt wird (werden).

Insbesondere für eine analytische Auswertung werden vorzugsweise mindestens drei Tangentenpaare bzw. Abstände der Tangenten der drei Tangentenpaare bestimmt. Insbesondere bei einer numerischen Auswertung können jedoch auch drei (unter drei verschiedenen Messwinkeln bestimmte) Tangenten ausreichen.

Generell geht es erfindungsgemäß insbesondere darum, aus einem vorliegenden Messdatensatz der tri- oder mehraxialen Messung (also einem Messdatensatz, der bei einer, ggf. gleichzeitigen bzw. momentanen, Messung unter wenigen diskreten, z. B. drei verschiedenen, Winkeln, gewonnen wurde) Werte für die Ovalität und/oder den Durchschnittsdurchmesser zu erlangen, die mit hoher Wahrscheinlichkeit vergleichsweise nahe an den tatsächlichen Werten sind bzw. diesen entsprechen.

Vorzugsweise werden die Ellipsenparameter, insbesondere a und b aus den jeweiligen Tangenten (bzw. aus den Abständen der jeweiligen Tangenten der mindestens drei Tangentenpaare) ohne vorherige Bestimmung des Neigungswinkels des Querschnittes des Produktes bestimmt. Insbesondere ist also der Neigungswinkel, wenn die Ellipsenparameter, insbesondere a und b, bestimmt werden, noch unbekannt. Dieses Verfahren ist besonders einfach in der Durchführung. Alternativ wäre es auch möglich, zunächst den Neigungswinkel aus den Tangenten (bzw. Abständen der jeweiligen Tangenten der mindestens drei Tangentenpaare) zu bestimmen und mittels dieses bestimmten Neigungswinkels dann die Ellipsenparameter, insbesondere a und b, zu bestimmen (zu errechnen). Bei dieser Variante würde dann sinnvollerweise nur noch der Durchschnittsdurchmesser und/oder die Ovalität (nachfolgend) bestimmt, da der Neigungswinkel schon im vorherigen Schritt errechnet (bestimmt) worden ist.

Ovalität, Durchschnittsdurchmesser und/oder Neigungswinkel und/oder die Ellipsenparameter, insbesondere a und/oder b, können analytisch und/oder numerisch bestimmt werden.

In einer konkreten Ausführungsform wird (tri-axial) unter genau drei verschiedenen Winkeln gemessen, die vorzugsweise relativ zueinander einen Winkelabstand von (zumindest im Wesentlichen) 120° aufweisen. Bei einer derartigen Messung kann auf einfache Art und Weise ein genauer Wert für den gewünschten Parameter (analytisch) erzielt werden.

Ein Algorithmus zur (analytischen) Bestimmung des Neigungswinkels für diese konkrete Ausführungsform arbeitet vorzugsweise mindestens mit der folgenden Gleichung oder mindestens einer darauf basierenden Gleichung:

$$\tan(2 \cdot \theta) = \sqrt{3} \cdot (y_2{}^2 - y_0{}^2)/(y_0{}^2 - 2 \cdot y_1{}^2 + y_2{}^2).$$

Ein Algorithmus zur Bestimmung von a und/oder b arbeitet vorzugsweise mit mindestens einer der folgenden Gleichungen und/oder mit mindestens einer auf mindestens einer der folgenden Gleichungen basierenden Gleichung:

$$a^2+b^2 = (y_0{}^2 + y_1{}^2 + y_2{}^2)\cdot 2/3;$$

$$a^2-b^2 = \frac{4}{3}(y_0{}^4 + y_1{}^4 + y_2{}^4 - y_0{}^2\cdot y_1{}^2 - y_0{}^2\cdot y_2{}^2 - y_1{}^2\cdot y_2{}^2)^{0.5};$$

$$a=(((a^2+b^2)+(a^2-b^2))/2)^{0,5};$$

und/oder

$$b=(((a^2+b^2)-(a^2-b^2))/2)^{0,5}.$$

Weiterhin kann unter (genau) drei oder mehr verschiedenen Winkeln gemessen werden, wobei mindestens zwei der (genau) drei oder mehr Winkel einen Winkelabstand von ungleich 120° (allg.: ungleich $\beta$ = 360° geteilt durch Anzahl der Mess-Achsen) aufweisen, beispielsweise einen Winkelabstand zueinander aufweisen, der um mehr als 2° oder mehr als 5° oder mehr als 10° von dem 120°-Winkel (allg.: dem Winkel $\beta$) abweicht.

Im Allgemeinen ist es bevorzugt unter einen äquidistanten Winkelabstand zu messen, d.h., dass alle (drei oder mehr) verschiedenen Messwinkel relativ zu ihren beiden Messwinkel-Nachbarn denselben Winkelabstand aufweisen.

Insbesondere wenn unter mehr als drei verschiedenen Winkeln gemessen wird und/oder zwar beispielsweise bei drei verschiedenen Winkeln gemessen wird, jedoch nicht mit äquidistantem Winkelabstand, kann zur Bestimmung von a und/oder b und/oder der Ovalität und/oder des Durchschnittsdurchmessers und/oder des Neigungswinkels eine numerische Optimierung, insbesondere unter Verwendung einer Kostenfunktion, beispielsweise gemäß

$$\sum_i \, (d_i - d_i{}^{est})^2 + \gamma \cdot (p_i - p_i{}^{est})^2$$

durchgeführt werden, wobei:

$\gamma$ = Gewichtungsfaktor

di = Durchmesser des Produktes bzw. dessen Querschnittes, wie unter einem Winkel i bestimmt

$p_i$ = Position des Produktes bzw. dessen Querschnittes, wie unter dem Winkel i bestimmt

$d_i{}^{est}$ (a, b, $\theta$, $x_c$, $y_c$) = geschätzter, insbesondere berechneter, Durchmesser des Produktes bzw. dessen Querschnittes unter dem Winkel i in Abhängigkeit von a, b, $\theta$, $x_c$, $y_c$

$p_i{}^{est}$ (a, b, $\theta$, $x_c$, $y_c$) = geschätzte, insbesondere berechnete, Position des Produktes bzw. dessen Querschnittes unter dem Winkel i in Abhängigkeit von a, b, $\theta$, xc, $y_c$, wobei:

a = Haupthalbachse
b = Nebenhalbachse
$\theta$ = Neigungswinkel
$x_c$, $y_c$= Koordinaten eines Zentrums.

Vorzugsweise werden mehrere (an sich vollständige) Messungen (in zeitlichem Abstand zueinander) durchgeführt. Unter mehreren Messungen ist insbesondere zu verstehen, dass mehrere Messungen desselben Satzes von Tangentenabständen durchgeführt werden, so dass ein verbessertes Resultat, beispielsweise aufgrund einer Mittelung oder einer numerischen Optimierung erzielt werden kann.

Grundsätzlich können die Messungen unter den verschiedenen Winkeln gleichzeitig durchgeführt werden. Dazu sind vorzugsweise mehrere Messanordnungen, insbesondere Lichtmessanordnungen, vorzugsweise Laserscanner, vorgesehen, die jeweils einen lichtempfindlichen Sensor und mindestens einen Lichtemitter (insbesondere Laser) aufweisen können. Alternativ kann eine Messung unter verschiedenen Winkeln auch dadurch erzielt werden, dass eine Relativ-Rotation zwischen zu vermessendem Produkt und Messeinrichtung erfolgt.

Besonders bevorzugt wird unter (genau) drei verschiedenen Winkeln (bzw. tri-axial) gemessen. Es kann jedoch auch unter mehr als nur drei Winkeln gemessen werden, beispielsweise unter mindestens (oder genau) vier oder mindestens (oder genau) fünf oder mindestens (oder genau) sechs Winkeln. Insbesondere wird jedoch nicht kontinuierlich über einen Winkelbereich oder gar den gesamten 180 ° oder 360°-Winkel gemessen, sondern nur unter einzelnen diskreten Winkeln (beispielsweise maximal unter zehn verschiedenen, diskreten Winkeln oder eben unter genau drei verschiedenen diskreten Winkeln). Insbesondere wird erfindungsgemäß nicht ein größerer (oder gesamter 180 ° oder 360°-) Winkelbereich rastermäßig erfasst, sondern nur einige wenige (beispielsweise drei bzw. zumindest weniger als zehn oder weniger als acht) Messwinkel realisiert, wobei dennoch eine hohe Präzision hinsichtlich der gewünschten Parameter erzielt werden kann. Konkret ist es erfindungsgemäß auch so, dass a und b insbesondere nicht mittels einer Durchführung einer großen Vielzahl von Messungen bei verschiedenen bzw. allen möglichen Winkeln derart, dass das Maximum bzw. Minimum bestimmt werden kann (vgl. Fig. 4), bestimmt werden sollen. Erfindungsgemäß werden a und b werden aus den jeweiligen (wenigen, z. B. drei) Tangenten bzw. aus den Abständen der jeweiligen (wenigen, z. B. drei) Tangenten-Paare errechnet.

Das Verfahren (und nachfolgend beschriebene System) wird vorzugsweise zur Querschnittsbestimmung von, insbesondere kontinuierlich erzeugten, Produkten, wie beispielsweise Kabeln, Drähten, Stangen, Stiften und/oder Röhren verwendet.

Insofern von einer "Ellipse" die Rede ist, kann es sich um eine Ellipse im engeren Sinne handeln, also der Kreis (als Spezialfall der Ellipse im allgemeinen Sinne) ausgeschlossen sein. Selbstverständlich funktioniert das erfindungsgemäße Verfahren jedoch auch für den Fall, dass der Querschnitt des Produktes (exakt) kreisförmig ist. Dann kann als Ergebnis eben beispielsweise eine Ovalität von null bestimmt werden. Unter im Wesentlichen elliptisch soll insbesondere verstanden werden, dass sich für den entsprechenden Querschnitt eine Ellipse finden lässt, auf oder innerhalb der sämtliche Randpunkte des Querschnitts (also einer Konturlinie des Querschnitts) angeordnet sind, wobei keiner der Randpunkte einen größeren Abstand zu dieser (virtuellen) Ellipse aufweist der größer ist als 5 %, vorzugsweise 2 %, noch weiter vorzugsweise 1 % eines maximalen Durchmessers des Querschnitts (wobei der maximale Durchmesser des Querschnitts wiederum ein maximal möglicher Abstand eines Punktepaares unter sämtlichen möglichen Randpunktepaaren sein soll; also beispielsweise im Fall einer perfekten Ellipse die Haupthalbachse). Generell ist anzumerken, dass das vorliegende Verfahren ganz konkret auch für nicht-perfekte Ellipsen vorteilhaft ist, da durch die Annahme einer (perfekten) Ellipse zwar dann eine gewisse Ungenauigkeit aufgenommen wird, die jedoch in der Regel hinnehmbar sein dürfte bzw. insgesamt dann immer noch deutlich besser sein dürfte als bei den einleitend erläuterten Möglichkeiten zur Bestimmung der Ovalität (bzw. der übrigen Parameter). Weiterhin ist es oftmals bei einem bestimmten Produkt bereits bekannt (insbesondere aufgrund eines Herstellungsverfahrens), dass dieses zumindest im Wesentlichen elliptisch ist.

Die multi-axiale, insbesondere tri-axiale Messung kann grundsätzlich, wie im Stand der Technik beschrieben (beispielsweise WO 2010/037865 A1) durchgeführt werden.

Die oben genannte Aufgabe wird weiterhin gelöst durch ein System zur Vermessung eines Querschnittes eines Produktes, insbesondere eines Rundprofils, mit unbekannter Ovalität (und unbekanntem Durchschnittsdurchmesser bzw. Neigungswinkel), umfassend eine mindestens tri-axiale, Messeinrichtung, die konfiguriert ist, um mindestens drei an dem zu vermessenden Produkt anliegende Schattenkanten (bzw. mindestens drei an dem Produkt anliegende und das Produkt umschließende, Schattenkanten-Paare) zu vermessen und daraus mindestens drei entsprechende Tangenten (bzw. Tangentenpaare) zu bestimmen sowie eine Berechnungseinrichtung, die derart konfiguriert ist, dass sie unter Annahme einer elliptischen Form des zu vermessenden Querschnitts aus den jeweiligen Tangenten (bzw. Abständen der jeweiligen Tangenten der mindestens drei Tangentenpaare) Ellipsenparameter, insbesondere eine Ellipsen-Haupthalbachse a und eine Ellipsen-Nebenhalbachse b bestimmt und aus a und b die Ovalität und/oder einen Durchschnittsdurchmesser ableitet. Alternativ oder zusätzlich kann (direkt) aus diesen Tangenten (bzw. Tagentenpaaren) ein Neigungswinkel des Querschnittes abgeleitet werden.

Die Berechnungseinrichtung kann insbesondere einen Prozessor, vorzugsweise Mikroprozessor aufweisen und/oder einen (insbesondere elektronischen) Speicher.

Bei der Messeinrichtung handelt es sich vorzugsweise um eine optische Messeinrichtung. Die optische Messeinrichtung weist vorzugsweise mindestens eine(n), weiter vorzugsweise mindestens drei Lichtmessanordnungen, insbesondere Laserscanner, auf. Die (jeweilige) Lichtmessanordnung kann mindestens einen lichtempfindlichen Sensor und mindestens einen Lichtemitter, insbesondere Laser, aufweisen. Alternativ kann auch ein mechanisches Messen, beispielsweise mittels Schiebelehre erfolgen.

Die Berechnungseinrichtung ist weiter vorzugsweise konfiguriert, um die weiter oben im Hinblick auf das Verfahren genannten Berechnungs- (bzw. Bestimmungs- oder Schätzungs-) Schritte durchzuführen.

Weitere Ausführungsformen ergeben sich aus den Unteransprüchen.

Nachfolgend wird die Erfindung im Hinblick auf weitere Ausführungsbeispiele und Details beschrieben, die anhand der Abbildungen näher erläutert werden. Hierbei zeigen:

Fig. 1    eine schematische Darstellung eines Vermessungssystems zur Illustrierung der Erfindung;

Fig. 2     eine Darstellung analog Fig. 1 mit abweichendem Messwinkel;

Fig. 3     eine schematische Darstellung einer Mess-Konfiguration zur Erläuterung der Erfindung;

Fig. 4     ein Durchmesser-Messwinkel-Diagramm zur Erläuterung der Erfindung;

Fig. 5     ein weiteres Durchmesser-Messwinkel-Diagramm zur Erläuterung der Erfindung;

Fig. 6     ein Ovalitäts-Messwinkel-Diagramm zur Erläuterung der Erfindung;

Fig. 7     ein weiteres Ovalitäts-Messwinkel-Diagramm zur Erläuterung der Erfindung;

Fig. 8     ein weiteres Ovalitäts-Messwinkel-Diagramm zur Erläuterung der Erfindung;

Fig. 9     eine schematische Darstellung eines zu vermessenden Querschnitts einschließlich Mess-Achsen gemäß der Erfindung; und

Fig. 10     eine weitere schematische Darstellung des zu vermessenden Querschnittes unter verschiedenen Messwinkeln gemäß der Erfindung.

In der nachfolgenden Beschreibung werden für gleiche und gleichwirkende Teile dieselben Bezugsziffern verwendet.

Fig. 1 zeigt eine schematische Messanordnung zur Erläuterung der Erfindung. Das Produkt 10 bzw. dessen Querschnitt ist hier kreisförmig. Über den Pfeil 11 ist ein (senkrecht zu seiner Strahlrichtung bewegbarer) Laserstrahl symbolisiert, der (in Fig. 1) von oben nach unten verfahren wird, so dass ein Schatten 12 mit einer entsprechenden Schattenbreite 13 gemessen werden kann. Die Linie 14 zeigt wiederum einen Durchmesser des Produktquerschnittes (hier: Kreisdurchmesser). In Fig. 2 ist Entsprechendes gezeigt, nur dass hier die Strahlrichtung des Laserstrahls 11 gegenüber Fig. 1 um 90° verdreht ist (also der entsprechende Messwinkel um 90° gegenüber Fig. 1 verdreht ist).

Fig. 3 zeigt eine Darstellung gemäß Fig. 1, hier jedoch für ein Produkt mit elliptischem (nicht-kreisförmigem) Querschnitt.

Die Fig. 4-8 wurden einleitend bereits erläutert.

Grundsätzlich werden Ovalität (und/oder Durchschnitts-Durchmesser) nicht von Messwerten (letztlich den Schattenbreiten) direkt bestimmt, sondern es werden zunächst Ellipsenparameter a und b bestimmt (oder geschätzt) und darauf, also basierend auf dieser Bestimmung (Schätzung), der Durchschnittsdurchmesser und die Ovalität in Abhängigkeit von a und b (gemäß den Zusammenhängen Davg = (a + b) bzw. Ovalität = 2·(a - b) berechnet. Nochmals sei darauf hingewiesen, dass der wahre (tatsächliche) Querschnitt des Produktes nicht-elliptisch (bzw. nicht exakt elliptisch) sein kann. Zumindest wenn jedoch nur vergleichsweise geringfügige Abweichungen vorliegen und/oder wenn das Produkt bzw. dessen Querschnitt eine Symmetrie entlang zweier senkrecht zueinanderstehenden Mess-Achsen aufweist (was in vielen Anwendungen der Fall ist), ist die Ellipse eine ausreichend gute Annäherung des Querschnitts. Insgesamt kann also Ovalität und Durchschnittsdurchmesser konsistent geschätzt werden, unabhängig von den Messwinkeln (Beobachtungswinkeln) unter dem die Messdaten gewonnen werden.

Insbesondere in Abhängigkeit von der Anzahl von verschiedenen Messwinkeln, können mehrere Verfahren zur Bestimmung (Schätzung) der gesuchten Parameter durchgeführt werden.

**Verfahren 1: Messung mit einer tri-axialen Messeinrichtung (Mikrometer) unter Annahme eines elliptischen Querschnittes:**

Beim Verfahren 1 wird angenommen, dass es sich bei dem zu vermessenden Querschnitt um einen elliptischen Querschnitt handelt (was nicht zwingend, siehe oben, der Fall sein muss, bzw. zumindest nicht exakt der Fall sein muss). In anderen Worten wird also von einem elliptischen Modell des Querschnittes ausgegangen.

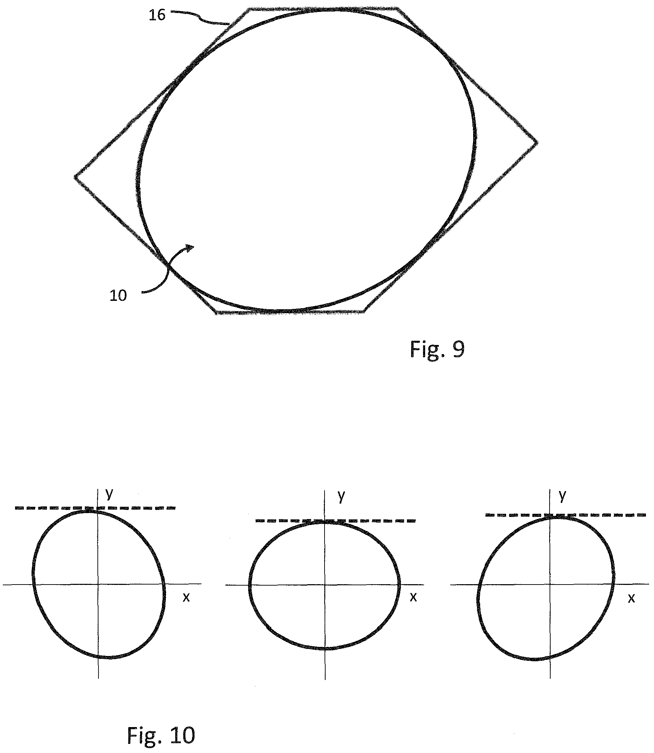

In einem solchen Fall können die Haupthalbachse a und Nebenhalbachse b berechnet werden. Insbesondere können in der entsprechenden Messeinrichtung die drei Mess-Achsen ein Sechseck definieren, wobei (nur) eine Ellipse existiert, die alle sechs Seiten des Hexagramms (einmal) berührt. Dies ist in Fig. 9 gezeigt. Fig. 9 zeigt den Querschnitt eines Produktes 10, der eine elliptische Form hat und von einem Sechseck 16 eingerahmt wird. In Fig. 9 wird in einem äquidistanten Winkelabstand (von zumindest ungefähr 120°) gemessen.

Eine Möglichkeit, eine Ellipse zu definieren ist wie folgt:

$$x = a \cdot \cos(\alpha), \; y = b \cdot \sin(\alpha)$$

wobei $\alpha$ den Winkelparameter darstellt und x bzw. y die Entfernung vom Zentrum der Ellipse darstellen.

Die (obige) Gleichung ist jedoch eine Gleichung für eine Ellipse, bei der die Haupt- und Nebenhalbachse mit der kartesischen Ebene ausgerichtet ist. Im vorliegenden Fall ist jedoch zu berücksichtigen, dass das zu messende Produkt (bzw. dessen Querschnitt) innerhalb des Messbereichs (Messfelds) rotiert sein kann. Die Gleichung für die Rotation eines Punktes um seinen Ursprung ist:

$$x_r = x \cdot \cos(\theta) - y \cdot \sin(\theta)$$

$$y_r = x \cdot \sin(\theta) + y \cdot \cos(\theta)$$

Die Gleichung für die rotierte Ellipse ist daher:

$$x_r = a \cdot \cos(\alpha) \cdot \cos(\theta) - b \cdot \sin(\alpha) \cdot \sin(\theta)$$

$$y_r = a \cdot \cos(\alpha) \cdot \sin(\theta) + b \cdot \sin(\alpha) \cdot \cos(\theta) \tag{1}$$

Da der Winkel der einzelnen Mess-Achsen bekannt ist, kann der Neigungswinkel $\theta$ als Unterschied zwischen dem Mess-Winkel (also dem Winkel einer Mess-Achse) und dem Winkel einer Ellipsen-Achse angesehen werden.
Zur Illustration wird auf Fig. 10 verwiesen, in der ein Ellipsen-Profil gezeigt ist, das so rotiert ist, dass die Tangentenlinien horizontal ausgerichtet sind.
Wenn man nun annimmt, dass die zu berücksichtigende Mess-Achse horizontal verläuft, kann die Entfernung des Berührungspunktes, an dem beispielsweise ein Lichtstrahl das Produkt ("oben") berührt und dem Ellipsenzentrum dadurch bestimmt werden, dass überprüft wird, bei welchem Winkel $\alpha$ $y_r$ maximal (also gleich a) oder minimal (also gleich b) wird. Das kann dadurch erfolgen, dass die Ableitung der Gleichung für $y_r$ (siehe Gleichungen (1)) in Abhängigkeit von $\alpha$ gebildet wird und diese Ableitung gleich null gesetzt wird, wie folgt:

$$dy_r/d\alpha = -a \cdot \sin(\alpha) \cdot \sin(\theta) + b \cdot \cos(\alpha) \cdot \cos(\theta) = 0$$

Daraus kann, unter Berücksichtigung von Gleichung (1), das folgende Gleichungssystem erhalten werden:

$$y_r = a \cdot \cos(\alpha) \cdot \sin(\theta) + b \cdot \sin(\alpha) \cdot \cos(\theta)$$

$$0 = -a \cdot \sin(\alpha) \cdot \sin(\theta) + b \cdot \cos(\alpha) \cdot \cos(\theta)$$

Quadrieren dieser Gleichungen ergibt:

$$y_r = a^2 \cdot \cos^2(\alpha) \cdot \sin^2(\theta) + 2 \cdot a \cdot b \cdot \cos(\alpha) \cdot \sin(\theta) \cdot \sin(\alpha) \cdot \cos(\theta) + b^2 \cdot \sin^2(\alpha) \cdot \cos^2(\theta)$$

$$0 = a^2 \cdot \sin^2(\alpha) \cdot \sin^2(\theta) - 2 \cdot a \cdot b \cdot \cos(\alpha) \cdot \sin(\theta) \cdot \sin(\alpha) \cdot \cos(\theta) + b^2 \cdot \cos^2(\alpha) \cdot \cos^2(\theta)$$

Aufsummieren der beiden Gleichungen ergibt:

$$y_r^2 = a^2 \cdot \cos^2(\alpha) \cdot \sin^2(\theta) + b^2 \cdot \sin^2(\alpha) \cdot \cos^2(\theta) + a^2 \cdot \sin^2(\alpha) \cdot \sin^2(\theta + b^2 \cdot \cos^2(\alpha) \cdot \cos^2(\theta)$$

$$y_r^2 = a^2 \cdot (\sin^2 (\alpha) + \cos^2 (\alpha)) \cdot \sin^2 (\theta) + b^2 \cdot (\sin^2 (\alpha) + \cos^2 (\alpha)) \cdot \cos^2 (\theta)$$

$$y_r^2 = a^2 \cdot \sin^2 (\theta) + b^2 \cdot \cos^2 (\theta)$$

Geht man nachfolgend von drei Mess-Achsen aus (eine horizontal und die beiden anderen gegenüber der Horizontalen verdreht um $\pm\pi/3$ bzw. $\pm 120°$ in Bezug auf die Horizontale) erhält man die folgenden drei Gleichungen:

$$y_0^2 = a^2 \cdot \sin^2 (\theta-\pi/3) + b^2 \cdot \cos^2 (\theta-\pi/3)$$
$$y_1^2 = a^2 \cdot \sin^2 (\theta) + b^2 \cdot \cos^2 (\theta)$$
$$y_2^2 = a^2 \cdot \sin^2 (\theta+\pi/3) + b^2 \cdot \cos^2 (\theta+\pi/3) \qquad (2)$$

wobei $y_0$, $y_1$ und $y_2$ Halb-Durchmesser-Werte darstellen, die bei den einzelnen Mess-Achsen ($y_i = d_i/2$ für $i=0,1,2$) erhalten werden.

Aus den obigen Gleichungen erhält man (mit dem Zusammenhang $\cos^2(\theta) = 1 - \sin^2(\theta)$) die alternativen Ausdrücke:

$$y_0^2 = (a^2-b^2) \cdot \sin^2 (\theta-\pi/3) + b^2$$
$$y_1^2 = (a^2-b^2) \cdot \sin^2 (\theta) + b^2$$
$$y_2^2 = (a^2-b^2) \cdot \sin^2 (\theta+\pi/3) + b^2 \qquad (3)$$

Daraus kann $a^2 + b^2$ berechnet werden, wie nachfolgen erläutert.

Zunächst sei darauf hingewiesen, dass gilt:

$$\sin^2 (\theta-\pi/3) + \sin^2 (\theta) + \sin^2 (\theta+\pi/3) = \cos^2 (\theta-\pi/3) + \cos^2 (\theta) + \cos^2 (\theta+\pi/3) = 3/2$$

Die Ableitung der Gleichung $a^2 + b^2$ beginnt mit einer Aufsummierung der drei Gleichungen unter (2). Dann gilt:

$$y_0^2 + y_1^2 + y_2^2 = (a^2-b^2) \cdot \sin^2 (\theta-\pi/3) + b^2 + (a^2-b^2) \cdot \sin^2 (\theta) + b^2 + (a^2-b^2) \cdot \sin^2 (\theta+\pi/3) + b^2$$

$$y_0^2 + y_1^2 + y_2^2 = (a^2-b^2) \cdot ( \sin^2 (\theta-\pi/3) + \sin^2 (\theta) + \sin^2 (\theta+\pi/3)) + 3b^2$$

$$y_0^2 + y_1^2 + y_2^2 = (a^2-b^2) \cdot 3/2 + 3b^2 = (a^2+b^2) \cdot 3/2$$

und somit:

$$(a^2+b^2) = (y_0^2 + y_1^2 + y_2^2) \cdot 2/3 \qquad (4)$$

$a^2 - b^2$ lässt sich wie folgt errechnen:
Aus der ersten und dritten Gleichung der Gleichungen unter (3) ergibt sich:

$$y_2^2-y_0^2 = (a^2-b^2)\cdot(\sin^2(\theta+\pi/3)-\sin^2(\theta-\pi/3))$$

$$y_2^2-y_0^2 = (a^2-b^2)\cdot(1-\cos(2\cdot(\theta+\pi/3))-(1-\cos(2\cdot(\theta-\pi/3))))/2$$

$$y_2^2-y_0^2 = (a^2-b^2)\cdot(\cos(2\cdot(\theta-\pi/3))-\cos(2\cdot(\theta+\pi/3)))/2$$

$$y_2^2-y_0^2 = (a^2-b^2)\cdot\sin(2\cdot\theta)\cdot\sin(2\cdot\pi/3) \tag{5}$$

Aus den Gleichungen bei (3) wiederum ergibt sich:

$$y_0^2 -2\cdot y_1^2+y_2^2 = (a^2-b^2)\cdot(\sin^2(\theta-\pi/3)-2\cdot\sin^2(\theta)+\sin^2(\theta+\pi/3))$$

$$y_0^2 -2\cdot y_1^2+y_2^2 = (a^2-b^2)\cdot((\sin^2(\theta-\pi/3)+\sin^2(\theta)+\sin^2(\theta+\pi/3))-3\cdot\sin^2(\theta))$$

$$y_0^2 -2\cdot y_1^2+y_2^2 = (a^2-b^2)\cdot(3/2-3\cdot\sin^2(\theta))$$

$$y_0^2 -2\cdot y_1^2+y_2^2 = (a^2-b^2)\cdot(3/2-3\cdot(1/2-\cos(2\cdot\theta)/2))$$

$$y_0^2 -2\cdot y_1^2+y_2^2 = (a^2-b^2)\cdot\cos(2\cdot\theta)\cdot3/2 \tag{6}$$

Aus den Gleichungen bei (5) und (6) ergibt sich dann:

$$1= \sin^2(2\cdot\theta)+ \cos^2(2\cdot\theta)=(y_2^2-y_0^2)^2/((a^2-b^2)\cdot\sqrt{3}/2)^2+$$

$$(y_0^2 -2\cdot y_1^2+y_2^2)^2/((a^2-b^2)\cdot3/2)^2$$

Schlussendlich, durch Auflösen nach $a^2 - b^2$, ergibt sich:

$$(a^2-b^2)^2= (y_2^2 - y_0^2)^2\cdot4/3+(y_0^2 +y_2^2 -2\cdot y_1^2)^2\cdot4/9$$

$$(a^2-b^2)^2= (3\cdot(y_2^2 -y_0^2)^2 +(y_0^2 +y_2^2 -2\cdot y_1^2)^2)\cdot4/9$$

$$(a^2-b^2)^2= (y_0^4 +y_1^4 +y_2^4 -y_0^2\cdot y_1^2 -y_0^2\cdot y_2^2 -y_1^2\cdot y_2^2)\cdot16/9$$

$$a^2-b^2=\frac{4}{3}(y_0^4 +y_1^4 +y_2^4 -y_0^2\cdot y_1^2 -y_0^2\cdot y_2^2 -y_1^2\cdot y_2^2)^{0,5} \tag{7}$$

Aus den Gleichungen bei (4) und (7) lassen sich dann die folgenden Ausdrücke ableiten:

$$a=(((a^2+b^2)+(a^2-b^2))/2)^{0,5} \text{ und } b=(((a^2+b^2)-(a^2-b^2))/2)^{0,5}$$

Damit können a und b und daraus insbesondere die oben definierte Ovalität und/oder der Durchschnittsdurchmesser bestimmt werden.

Weiterhin können aus den obigen Gleichungen (5) und (6) der Neigungswinkel wie folgt bestimmt werden:

$$\tan(2\cdot\theta)= \sin(2\cdot\theta)/\cos(2\cdot\theta))= ((y_2^2-y_0^2)/\sin(2\cdot\pi/3))/((y_0^2 -2\cdot y_1^2+y_2^2)\cdot2/3)$$

$$\tan(2\cdot\theta)= \sqrt{3}\cdot(y_2^2-y_0^2)/(y_0^2 -2\cdot y_1^2+y_2^2)$$

Diesbezüglich ist anzumerken, dass der Neigungswinkel $\theta$ von den Werten $y_0$, $y_1$ und $y_2$ abhängt. Dann gilt:

Wenn $2\cdot y_1^2<y_0^2+y_2^2$ dann $-\pi/4< \theta <\pi/4$
Wenn $2\cdot y_1^2>y_0^2+y_2^2$ dann $-\pi/2< \theta <-\pi/4$ oder $\pi/4< \theta <\pi/2$

Die beiden übrigen Winkel ergeben aufgrund der Symmetrie einer Ellipse dieselben Orientierungen, die bereits durch die oben betrachteten Fälle abgedeckt werden.

In den obigen Ableitungen können die Parameter a, b und $\theta$ (direkt) aus den Messungen $y_0$, $y_1$ und $y_2$ abgeleitet werden (wobei es sich dabei um die Halb-Durchmesserwerte der drei Mess-Achsen handelt). Tatsächlich liegen also sechs Messungen vor, nämlich die Breite und die Position des Schattens in dem Messfeld (korrespondierend mit der Position des Produktes bzw. dessen Querschnittes im Messfeld). Auch kann der elliptische Querschnitt irgendwo im Messfeld sein, wobei ein Zentrum bei den Koordinaten $x_c$, $y_c$ angeordnet sein kann und nicht (notwendigerweise) am Koordinatenursprung liegt.

Letztlich existiert also eine gewisse Redundanz (da sechs Messungen durchgeführt werden und fünf Variablen bestimmt werden), die daraus resultiert, dass Linien, die jeweils zentral (mittig) bezogen auf alle den Schatten erzeugenden Linien verlaufen, sich am selben (Zentrums-) Punkt kreuzen. In den obigen Berechnungen wurde implizit angenommen, dass das zu vermessende Produkt bzw. dessen Querschnitt (exakt) elliptisch ist und insofern das Messverfahren gleichermaßen exakt, so dass die Information aus der Position nur eine triviale "gleiche" Information darstellt und von daher nicht berücksichtigt werden muss bzw. unberücksichtigt bleiben kann.

Abgesehen davon, dass allerdings auch diese Positionsinformation (als grundsätzlich redundante Information) genutzt werden kann, liegen im allgemeinen Fall sogar noch weitere Redundanzen vor, insbesondere wenn noch mehr Mess-Achsen vorliegen (vier oder mehr). Insbesondere in einem solchen Fall, aber auch beispielsweise, wenn zwar nur (genau) drei Mess-Achsen vorliegen, diese jedoch nicht im äquidistanten Winkelabstand zueinander verlaufen, kann das folgende Verfahren zum Einsatz kommen:

**Verfahren 2: Numerische Optimierung für den jeweiligen Satz an Messungen**

Grundsätzlich kann anstelle der (obigen) analytischen Vorgehensweise ein numerischer Ansatz gewählt werden. Dabei können Gradientenverfahren und/oder Gauß-Newton-Verfahren zur numerischen Optimierung zum Einsatz kommen.

Insbesondere kann dazu ein Modell der Messung bestimmt werden (definiert werden), das die fünf Variablen der Ellipse, nämlich a, b, $\theta$, $x_C$, $y_C$, auf Durchmesser und Positionen di und $p_i$ des Produktes (bzw. dessen Querschnittes) bezieht, wie unter jeder Mess-Achse i bestimmt. Somit können Schätzungen $d_i^{est}$ (a, b, $\theta$, $x_C$, $y_C$) und $p_i^{est}$ (a, b, $\theta$, $x_C$, $y_C$) berechnet werden. Daraufhin kann beispielsweise eine Kostenfunktion eingesetzt werden, beispielsweise gemäß

$$\Sigma_i \, (d_i - d_i^{est})^2 + \gamma \cdot (p_i - p_i^{est})^2$$

Dabei ist $\gamma$ ein Gewichtungsfaktor. Die Kostenfunktion wird nach a, b, $\theta$, $x_C$, $y_C$ minimiert und somit a und b bestimmt. Die Haupthalbachse a und Nebenhalbachse b kann dann wiederum herangezogen werden, um Ovalität und Durchschnittsdurchmesser zu bestimmen.

Grundsätzlich kann aufgrund der oben beschriebenen Redundanzen eine vergleichsweise akkurate Bestimmung (Schätzung) erhalten werden, bei der die Beeinflussung von Rauschen (und sonstigen Störungen) erheblich reduziert werden kann.

**Verfahren 3:**

Verfahren 3 basiert auf Verfahren 1 oder Verfahren 2, wobei zusätzlich eine numerische Optimierung dahingehend durchgeführt wird, dass Daten von mehreren Mess-Sätzen ausgewertet werden. Dabei wird unterstellt (bzw. ausgenutzt), dass sich die Form des Produktes (bzw. dessen Querschnitts) nicht oder nur unwesentlich (über die Zeit) ändert. Dadurch kann dann ein Zeit-Filtern erfolgen, wodurch Rauschen oder sonstige Störungen bei der obigen Bestimmung (Schätzung) weiter reduziert werden können.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

Bezugszeichen

10 Produkt
11 Laserstrahl
12 Schatten
13 Schattenbreite

14    Durchmesser

16    Sechseck

**Patentansprüche**

1. Verfahren zur Vermessung eines Querschnittes eines Produktes (10), insbesondere eines Rundprofiles, mit unbekannter Ovalität,
wobei mittels einer mindestens triaxialen Messeinrichtung, mindestens drei an dem zu vermessenden Produkt (10) anliegende Schattenkanten vermessen und daraus mindestens drei Tangenten bestimmt werden,
wobei eine elliptische Form des zu vermessenden Querschnitts angenommen wird und aus den jeweiligen Tangenten Ellipsenparameter, insbesondere eine Ellipsen-Haupthalbachse a und eine Ellipsen-Nebenhalbachse b, und/oder ein Neigungswinkel des Querschnittes bestimmt werden, wobei aus den Ellipsenparametern, insbesondere aus a und b, die Ovalität und/oder ein Durchschnittsdurchmesser abgeleitet wird/werden.

2. Verfahren nach Anspruch 1,
**dadurch gekennzeichnet, dass**
die Ellipsenparameter, insbesondere a und b, aus den jeweiligen Tangenten ohne vorherige Bestimmung des Neigungswinkels des Querschnittes des Produktes (10) bestimmt werden.

3. Verfahren nach Anspruch 1 oder 2,
**dadurch gekennzeichnet, dass**
die Ovalität und/oder der Durchschnittsdurchmesser und/oder der Neigungswinkel und/oder die Ellipsenparameter, insbesondere a und/oder b, analytisch oder numerisch bestimmt wird/werden.

4. Verfahren nach einem der vorangehenden Ansprüche,
**dadurch gekennzeichnet, dass**
ein Algorithmus zur Bestimmung des Neigungswinkels mindestens mit der folgenden Gleichung oder mindestens einer darauf basierenden Gleichung arbeitet:

$$\tan(2\cdot\theta)= \sqrt{3}\cdot(y_2{}^2-y_0{}^2)/(y_0{}^2 -2\cdot y_1{}^2+y_2{}^2).$$

5. Verfahren nach einem der vorangehenden Ansprüche,
**dadurch gekennzeichnet, dass**
ein Algorithmus zur Bestimmung einer Haupthalbachse a und/oder einer Nebenhalbachse b mit mindestens einer der folgenden Gleichungen und/oder mit mindestens einer auf mindestens einer der folgenden Gleichungen basierenden Gleichung arbeitet:

$$a^2+b^2 = (y_0{}^2 + y_1{}^2 + y_2{}^2)\cdot 2/3;$$

$$a^2-b^2 = \frac{4}{3}(y_0{}^4 +y_1{}^4 +y_2{}^4 -y_0{}^2\cdot y_1{}^2 -y_0{}^2\cdot y_2{}^2 -y_1{}^2\cdot y_2{}^2)^{0.5};$$

$$a=(((a^2+b^2)+(a^2-b^2))/2)^{0.5};$$

und/oder

$$b=(((a^2+b^2)-(a^2-b^2))/2)^{0.5}.$$

6. Verfahren nach einem der vorangehenden Ansprüche,
**dadurch gekennzeichnet, dass**
unter einem zumindest im Wesentlichen äquidistanten Winkelabstand gemessen wird, vorzugsweise unter drei verschiedenen Winkeln gemessen wird, die vorzugsweise relativ zueinander einen Winkelabstand von zumindest im Wesentlichen 120° aufweisen.

7. Verfahren nach einem der vorangehenden Ansprüche,
   **dadurch gekennzeichnet, dass**
   unter drei oder mehr verschiedenen Winkeln gemessen wird, wobei mindestens zwei der drei oder mehr Winkel einen Winkelabstand von ungleich β = 360° geteilt durch Anzahl der Mess-Achsen, insbesondere ungleich 120° zueinander aufweisen, beispielsweise kleiner als 110° oder größer als 130°.

8. Verfahren nach einem der vorangehenden Ansprüche, insbesondere nach Anspruch 7,
   **dadurch gekennzeichnet, dass**
   zur Bestimmung von a und/oder b und/oder der Ovalität und/oder des Durchschnittsdurchmessers und/oder des Neigungswinkels eine numerische Optimierung, insbesondere unter Verwendung einer Kostenfunktion, beispielsweise gemäß

$$\sum_i (d_i - d_i^{est})^2 + \gamma \cdot (p_i - p_i^{est})^2$$

   durchgeführt wird, wobei:

   $\gamma$ = Gewichtungsfaktor
   $d_i$ = Durchmesser des Produktes (10) bzw. dessen Querschnittes, wie unter einem Winkel i bestimmt
   $p_i$ = Position des Produktes (10) bzw. dessen Querschnittes, wie unter dem Winkel i bestimmt
   $d_i^{est}$ (a, b, θ, $x_c$, $y_c$) = geschätzter, insbesondere berechneter, Durchmesser des Produktes (10) bzw. dessen Querschnittes unter dem Winkel i in Abhängigkeit von a, b, θ, $x_c$, $y_c$ $p_i^{est}$ (a, b, θ, $x_c$, $y_c$) = geschätzte, insbesondere berechnete, Position des Produktes (10) bzw. dessen Querschnittes unter dem Winkel i in Abhängigkeit von a, b, θ, $x_c$, $y_c$, wobei:

   a = Haupthalbachse
   b = Nebenhalbachse
   θ = Neigungswinkel
   $x_c$, $y_c$= Koordinaten eines Zentrums.

9. Verfahren nach einem der vorangehenden Ansprüche,
   **dadurch gekennzeichnet, dass**
   mehrere Messungen durchgeführt werden.

10. System zur Vermessung eines Querschnitts eines Produktes (10), insbesondere eines Rundprofiles, mit unbekannter Ovalität,
    umfassend eine mindestens triaxiale Messeinrichtung, die konfiguriert ist, um mindestens drei an dem zu vermessenden Produkt (10) anliegende Schattenkanten zu vermessen und daraus mindestens drei entsprechende Tangenten zu bestimmen sowie
    eine Berechnungseinrichtung, die derart konfiguriert ist, dass sie unter Annahme einer elliptischen Form des zu vermessenden Querschnitts aus den jeweiligen Tangenten Ellipsenparameter, insbesondere eine Ellipsen-Haupthalbachse a und eine Ellipsen-Nebenhalbachse b, und/oder einen Neigungswinkel des Querschnittes bestimmt und aus den Ellipsenparametern, insbesondere a und b, die Ovalität und/oder einen Durchschnittsdurchmesser ableitet.

11. System nach Anspruch 10,
    **dadurch gekennzeichnet, dass**
    die Messeinrichtung eine optische Messeinrichtung ist, die vorzugsweise mindestens eine(n), weiter vorzugsweise mindestens drei Lichtmessanordnung(en), insbesondere Laserscanner, umfasst.

Fig. 1

Fig. 2

Fig. 3

Fig. 4

Fig. 5

Fig. 6

Fig. 7

Fig. 8

16

Fig. 9

Fig. 10

Europäisches
Patentamt

European
Patent Office

Office européen
des brevets

**EUROPÄISCHER RECHERCHENBERICHT**

Nummer der Anmeldung

EP 18 17 1550

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 266 525 A1 (SIEMENS AG [DE]) 11. Mai 1988 (1988-05-11) * Spalte 3, Zeile 30 - Zeile 58; Abbildung 1 * * Spalte 4, Zeile 11 - Zeile 34 * * Spalte 4, Zeile 42 - Spalte 6, Zeile 18 * ----- | 1-5,7-11 | INV. G01B11/24 G01B11/245 |
| X | GB 2 121 956 A (RICHTER BRUNO DIPL ING FA) 4. Januar 1984 (1984-01-04) * Satz 111 - Satz 116; Abbildung 2 * * Satz 119 - Satz 128 * ----- | 1-6,8-11 | |
| X | DE 37 09 598 A1 (FEESER VOLKER DR ING [DE]) 6. Oktober 1988 (1988-10-06) * Spalte 1, Zeile 65 - Spalte 2, Zeile 22 * * Spalte 2, Zeile 53 - Zeile 58 * * Spalte 3, Zeile 20 - Zeile 24 * * Spalte 3, Zeile 64 - Spalte 4, Zeile 8 * ----- | 1-6,8-11 | |

RECHERCHIERTE SACHGEBIETE (IPC)

G01B
G06T

Der vorliegende Recherchenbericht wurde für alle Patentansprüche erstellt

| Recherchenort | Abschlußdatum der Recherche | Prüfer |
|---|---|---|
| München | 20. August 2018 | Biedermann, Benjamin |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 17 1550

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-08-2018

| Im Recherchenbericht angeführtes Patentdokument | Datum der Veröffentlichung | Mitglied(er) der Patentfamilie | Datum der Veröffentlichung |
|---|---|---|---|
| EP 0266525 A1 | 11-05-1988 | DE 3633275 A1<br>EP 0266525 A1 | 08-10-1987<br>11-05-1988 |
| GB 2121956 A | 04-01-1984 | CH 662651 A5<br>DE 3219389 A1<br>GB 2121956 A | 15-10-1987<br>24-11-1983<br>04-01-1984 |
| DE 3709598 A1 | 06-10-1988 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010037865 A1